(19) Europäisches Patentamt
European Patent Office
Office européen des brevets

(11) EP 3 516 794 B1

(12) FASCICULE DE BREVET EUROPEEN

(45) Date de publication et mention de la délivrance du brevet:
**27.05.2020 Bulletin 2020/22**

(21) Numéro de dépôt: **17772414.3**

(22) Date de dépôt: **25.09.2017**

(51) Int Cl.:
***H04B 7/185*** *(2006.01)* ***H04B 7/26*** *(2006.01)*
***H04B 7/06*** *(2006.01)* ***H04B 7/08*** *(2006.01)*
***B64C 39/02*** *(2006.01)*

(86) Numéro de dépôt international:
**PCT/EP2017/074246**

(87) Numéro de publication internationale:
**WO 2018/055169 (29.03.2018 Gazette 2018/13)**

# (54) PROCÉDÉ PERMETTANT UNE DISCRIMINATION DE COMMUNICATIONS MONTANTES OU DESCENDANTES

VERFAHREN ZUR UNTERSCHEIDUNG VON UPLINK- ODER DOWNLINK-KOMMUNIKATION

METHOD FOR DISCRIMINATION OF UPLINK OR DOWNLINK COMMUNICATIONS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.09.2016 FR 1601401**

(43) Date de publication de la demande:
**31.07.2019 Bulletin 2019/31**

(73) Titulaire: **Safran Electronics & Defense**
**92100 Boulogne-Billancourt (FR)**

(72) Inventeur: **TODESCHINI, Eric**
**92100 Boulogne Billancourt (FR)**

(74) Mandataire: **Cabinet Le Guen Maillet**
**3, impasse de la Vigie**
**CS 71840**
**35418 Saint-Malo Cedex (FR)**

(56) Documents cités:
**EP-A1- 1 045 533 WO-A1-2015/043123**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 3 516 794 B1

## Description

L'invention concerne un procédé mis en œuvre dans un système de dispositifs mobiles sans pilote comprenant une station de commande et au moins un dispositif mobile sans pilote permettant une discrimination de communications montantes de la station de commande vers un dispositif mobile sans pilote ou descendantes d'un dispositif mobile sans pilote vers la station de commande.

La préservation des êtres humains est devenue une préoccupation majeure dans bien des domaines. C'est ainsi que dans beaucoup de missions périlleuses, les êtres humains sont remplacés par des dispositifs mobiles sans pilotes. On peut citer par exemple certaines missions d'observation sur des zones dangereuses telles que des zones de conflit, des chantiers en hauteur, ou des sites nucléaires assurées par des dispositifs aéroportés sans pilote appelés drones, des dispositifs roulants, flottants ou submersibles.

Bien que certains dispositifs mobiles sans pilotes soient entièrement automatiques, beaucoup de ces dispositifs sont commandés à distance par un ou plusieurs êtres humains à partir d'une station de commande. Ces dispositifs mobiles sans pilote doivent généralement transmettre des résultats d'observations soit à une personne qui les commande, soit à une personne chargée d'analyser des données issues de ces observations. Ces données comprennent fréquemment des images et parfois des vidéos. Il est alors nécessaire d'établir des communications sans fils entre les dispositifs mobiles sans pilote et la station de commande pour assurer un contrôle à distance desdits dispositifs et une transmission des données d'observation. De telles communications doivent être le plus fiable possible afin, d'une part, qu'une perte de contrôle n'entraîne pas la perte d'un dispositif mobile sans pilote pouvant avoir un coût très élevé, et d'autre part, pour que les données d'observation soient le plus exploitables possible.

Il est connu des systèmes dits systèmes de dispositifs mobiles sans pilotes comprenant une pluralité de dispositifs mobiles sans pilotes et au moins une station de commande. Dans de tels systèmes, il existe des communications dites montantes, allant de la station de commande vers un dispositif mobile sans pilote et des communications dites descendantes, allant d'un drone vers la station de commande. Il est important pour un dispositif mobile sans pilote de pouvoir identifier rapidement les communications montantes qui peuvent le concerner, des communications descendantes qui émanent d'un autre dispositif mobile sans pilote et de ce fait, ne le concerne généralement pas. Il est aussi important pour une station de commande de pouvoir identifier rapidement les communications descendantes qui peuvent le concerner, des communications montantes qui pourraient émaner d'une autre station de commande et de ce fait, ne la concerne pas.

Le document WO 2015/043123 A1 décrit un procédé permettant d'améliorer la communication de données entre des terminaux de communication et fournissant une transmission robuste de données de liaison montante et une transmission à large bande de données en liaison descendante tout en évitant les interférences entre la transmission de données de liaison montante et la transmission de liaison descendante.

Le document EP 1 045 533 A1 décrit un système de communication permettant de transmettre et recevoir des blocs de données et permettant de distinguer différents types de blocs de données et distinguer en particulier des blocs de données montantes des blocs de données descendantes.

Il serait souhaitable de définir un procédé et un système permettant à un dispositif mobile sans pilote ou à une station de commande d'identifier rapidement une communication montante d'une communication descendante. Il serait aussi souhaitable que ce procédé ait un coût calculatoire faible et que le système mettant en œuvre ce procédé soit de faible complexité.

Selon un aspect de la présente invention, la présente invention concerne un procédé mis en œuvre dans un système de dispositifs mobiles sans pilote comprenant une station de commande et au moins un dispositif mobile sans pilote, la station de commande communiquant avec chaque dispositif mobile sans pilote en utilisant une technique d'accès au médium de type accès multiple à répartition dans le temps dans laquelle chaque communication se fait dans des trames. Chaque trame est divisée en une pluralité d'intervalles temporels, chaque intervalle étant divisé en une pluralité de sous-intervalles, chaque sous-intervalle étant divisé en une pluralité de périodes permettant de transmettre des données sous forme de paquets de données, chaque paquet de données étant modulé par une modulation prédéfinie avant sa transmission, une première période de la pluralité de périodes permettant de transmettre un préambule permettant à un récepteur dudit préambule de faire une estimation de canal afin de réaliser des synchronisations fréquentielles, de phase, de rythme et des égalisations de signaux de réception, ledit préambule étant utilisé en outre pour identifier les communications montantes des communications descendantes, et une deuxième période permettant de transmettre un bloc de données. Le procédé comprend : utiliser dans chaque communication montante de la station de commande vers un dispositif mobile sans pilotes, un préambule, dit préambule montant, orthogonal au préambule, dit préambule descendant, utilisé dans chaque communication descendante d'un dispositif mobile sans pilote vers la station de commande ; et, lors d'une réception d'un paquet de données modulé, déterminer si ledit paquet a été transmis dans le cadre d'une communication montante ou descendante en fonction d'un résultat d'une convolution entre ledit paquet avec un préambule de référence modulé suivant la modulation prédéfinie, ledit préambule de référence correspondant au préambule montant ou au préambule descendant.

De cette manière, un récepteur d'un paquet de données est capable de déterminer si ledit paquet a été transmis dans le cadre d'une communication montante ou descendante sans avoir à démoduler ledit paquet. Le paquet peut alors facilement être rejeté par le récepteur, si ledit récepteur n'est pas concerné par ledit paquet. Ce procédé de discrimination des paquets transmis dans le cadre d'une communication montante ou descendante a donc un faible coût calculatoire.

Selon un mode de réalisation, lorsque lors d'un calcul de convolution entre ledit paquet et le préambule descendant modulé, une valeur de corrélation supérieure ou égale à un premier seuil prédéfini est obtenue, ledit paquet est considéré comme ayant été transmis dans le cadre d'une communication descendante, et lorsque lors d'un calcul de convolution entre ledit paquet et le préambule montant modulé, une valeur de corrélation supérieure ou égale à un second seuil prédéfini est obtenue, ledit paquet est considéré comme ayant été transmis dans le cadre d'une communication montante.

Selon un mode de réalisation, lorsque lors d'un calcul de convolution entre ledit paquet et le préambule descendant modulé, une valeur de corrélation inférieure au premier seuil prédéfini est obtenue, ledit paquet est considéré comme n'ayant pas été transmis dans le cadre d'une communication descendante, et lorsque lors d'un calcul de convolution entre ledit paquet et le préambule montant modulé, une valeur de corrélation inférieure au second seuil prédéfini est obtenue, ledit paquet est considéré comme n'ayant pas été transmis dans le cadre d'une communication montante.

Selon un mode de réalisation, lorsque la station de commande considère qu'un paquet de données modulé reçu a été transmis dans le cadre d'une communication montante, la station de commande rejette ledit paquet, lorsque la station de commande considère qu'un paquet de données modulé reçu a été transmis dans le cadre d'une communication descendante, la station de commande poursuit une procédure de réception dudit paquet comprenant une démodulation dudit paquet,

Selon un mode de réalisation, lorsqu'un dispositif mobile sans pilote considère qu'un paquet de données modulé reçu a été transmis dans le cadre d'une communication descendante, le dispositif mobile sans pilote rejette ledit paquet, lorsque le dispositif mobile sans pilote considère qu'un paquet de données modulé reçu a été transmis dans le cadre d'une communication montante, le dispositif mobile sans pilote poursuit une procédure de réception dudit paquet comprenant une démodulation dudit paquet.

Selon un mode de réalisation, le préambule montant et le préambule descendant sont des séquences binaires pseudo-aléatoires.

Selon un mode de réalisation, la convolution est implémentée sous forme d'un filtre à réponse impulsionnelle finie.

Selon un deuxième aspect de l'invention, l'invention concerne un système de dispositifs mobiles sans pilote comprenant une station de commande et au moins un dispositif mobile sans pilote, la station de commande communiquant avec chaque dispositif mobile sans pilote en utilisant une technique d'accès au médium de type accès multiple à répartition dans le temps dans laquelle chaque communication se fait dans des trames. Chaque trame est divisée en une pluralité d'intervalles temporels, chaque intervalle étant divisé en une pluralité de sous-intervalles, chaque sous-intervalle étant divisé en une pluralité de périodes permettant de transmettre des données sous forme de paquets de données, chaque paquet de données étant modulé par une modulation prédéfini avant sa transmission, une première période de la pluralité de périodes permettant de transmettre un préambule permettant à un récepteur dudit préambule de faire une estimation de canal afin de réaliser des synchronisations fréquentielles, de phase, de rythme et des égalisations de signaux de réception, ledit préambule étant utilisé en outre pour identifier les communications montantes des communications descendantes, et une deuxième période permettant de transmettre un bloc de données. Le système comprend : des moyens d'insertion pour insérer dans chaque paquet de données transmis dans le cadre d'une communication montante de la station de commande vers un dispositif mobile sans pilotes, un préambule, dit préambule montant, orthogonal au préambule, dit préambule descendant, inséré dans chaque paquet de données transmis dans le cadre d'une communication descendante d'un dispositif mobile sans pilote vers la station de commande ; et ; des moyens de détermination pour déterminer, lors d'une réception d'un paquet de données modulé, si ledit paquet a été transmis dans le cadre d'une communication montante ou descendante en fonction d'un résultat d'une convolution entre ledit paquet avec un préambule de référence modulé suivant la modulation prédéfinie, ledit préambule de référence correspondant au préambule montant ou au préambule descendant.

Selon un troisième aspect de l'invention, l'invention concerne un programme d'ordinateur, comprenant des instructions pour mettre en œuvre, par un dispositif, le procédé selon le premier aspect, lorsque ledit programme est exécuté par un processeur dudit dispositif.

Selon un quatrième aspect de l'invention, l'invention concerne des moyens de stockage, stockant un programme d'ordinateur comprenant des instructions pour mettre en œuvre, par un dispositif, le procédé selon le premier aspect, lorsque ledit programme est exécuté par un processeur dudit dispositif.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

- la Fig. 1 illustre schématiquement un système de dispositifs mobiles sans pilote ;
- la Fig. 2 illustre schématiquement une zone de portée autour d'un système antennaire d'une station de commande ;
- la Fig. 3 illustre schématiquement une zone de portée autour d'un système antennaire d'un drone ;
- la Fig. 4A illustre schématiquement un module de traitement compris dans une station de commande;
- la Fig. 4B illustre schématiquement un module de traitement compris dans un drone;
- la Fig. 5 illustre schématiquement une technique d'accès au médium selon l'invention, de type accès multiple à répartition dans le temps divisant le temps en plusieurs niveaux hiérarchiques de divisions temporelles;
- la Fig. 6 illustre schématiquement un module d'émission selon l'invention;
- la Fig. 7 illustre schématiquement un module de réception selon l'invention ;
- la Fig. 8 illustre schématiquement un procédé de transmission d'un paquet de données selon l'invention ; et,
- la Fig. 9 illustre schématiquement un procédé de réception d'un paquet de données selon l'invention.

L'invention est décrite par la suite dans un contexte de système de dispositifs mobiles sans pilote comprenant une station de commande et de un à quatre drones. Nous appelons donc par la suite le système de dispositifs mobiles sans pilote *système de drones.* L'invention s'applique toutefois dans d'autres contextes. Par exemple l'invention pourrait tout aussi bien s'appliquer à d'autres dispositifs mobiles sans pilotes tels que des dispositifs roulants, flottants ou submersibles. Par ailleurs l'invention pourrait s'appliquer avec un nombre différent de drones et/ou un nombre différents de stations de commande.

Par extension, l'invention s'applique à d'autres contextes que celui des systèmes de dispositifs mobiles sans pilote. L'invention peut s'appliquer dans des réseaux utilisant une technique d'accès au médium de type accès multiple à répartition dans le temps (TDMA : « Time Division Multiple Access » en terminologie anglo-saxonne), que nous appelons par la suite réseau TDMA pour simplifier. Dans ce contexte l'invention permet de discriminer chacun des liens montants et descendant, de chacun des nœuds d'un réseau TDMA à l'aide de séquences de préambule modulées propres à chacun des nœuds et chacun des liens montants et descendants du réseau TDMA.

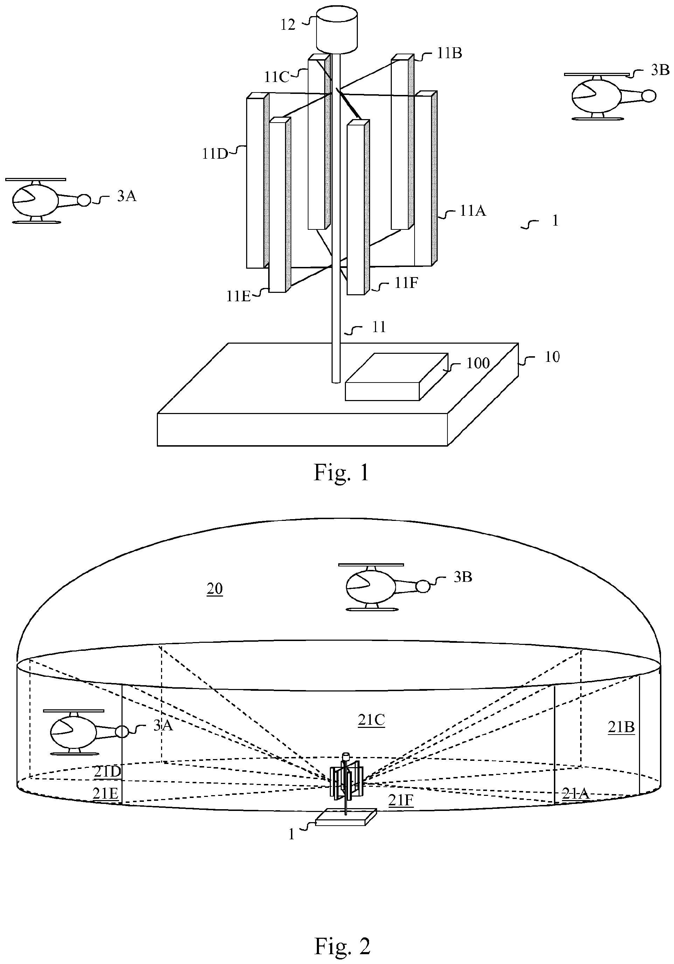

La **Fig. 1** illustre schématiquement un exemple de système de drones.

Dans l'exemple de la Fig. 1, un système de drones 1 comprend une station de commande 10 permettant de contrôler simultanément des drones 3A et 3B.

La station de commande 10 comprend un système antennaire 11 comprenant une pluralité d'antennes. La station de commande 10 comprend un module de traitement 100. La pluralité d'antennes comprend six antennes sectorielles 11A, 11B, 11C, 11D, 11E et 11F et une antenne omnidirectionnelle 12. Chaque antenne sectorielle permet de couvrir à « - 3dB » un azimut de « 60° » et une élévation de « +8° ». Les antennes sectorielles disposent chacune d'un gain à « +14dBi ». L'antenne omnidirectionnelle 12 permet de couvrir à « -3dB » un azimut de « 360° » et de « +8° » à « +90° » en élévation avec un gain allant de « +2.5 dBi » à « +6 dBi ». L'antenne omnidirectionnelle 12 sert à faible distance pour des passages de drones au-dessus du système antennaire 11 de la station de commande 10.

Chaque drone (3A ou 3B) comprend un système antennaire (non représenté) comprenant deux antennes omnidirectionnelles (non représentées), une antenne omnidirectionnelle permettant de couvrir à « -3dB » un azimut de « 360° » et de « 0° » à « +90° » en élévation et une antenne omnidirectionnelle permettant de couvrir à « -3dB » un azimut de « 360° » et de « 0° » à « -90° » en élévation.

Le système de drones 1 décrit en relation avec la Fig. 1 forme un réseau de communication dans lequel la station de commande 10 communique avec les drones 3A et 3B. La station de commande 10 et les drones 3A et 3B utilisent des communications montantes pour échanger notamment des données de contrôle et de commande dans le sens station de commande 10 vers drone (3A ou 3B) et des communications descendantes pour échanger des données utiles (par exemple des données d'observation) dans le sens drone (3A ou 3B) vers station de commande 10.

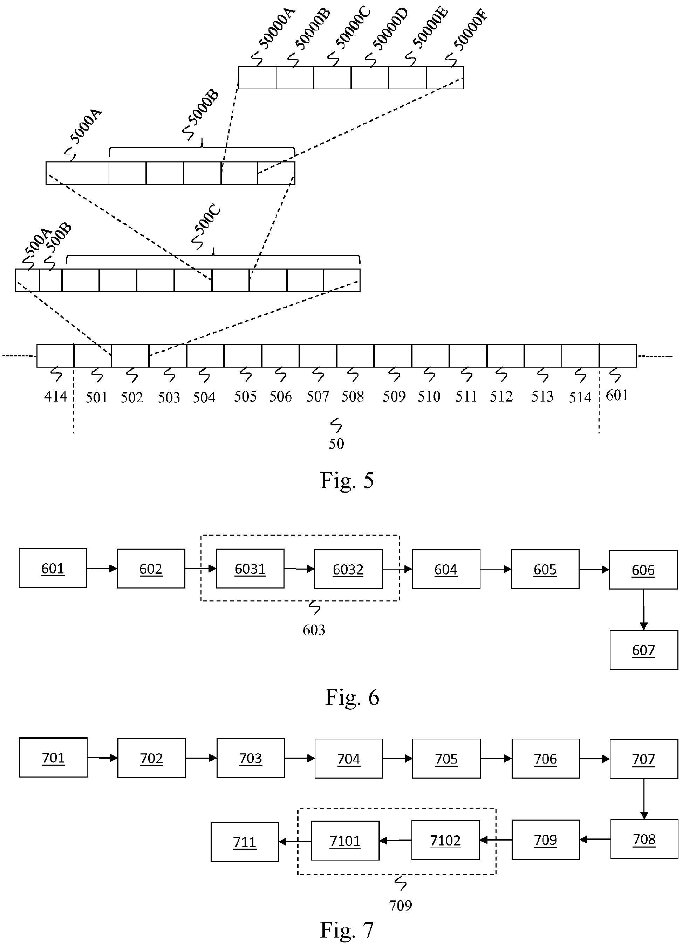

Dans le système de drones 1, la station de commande 10 et les drones 3A et 3B utilisent une technique d'accès au médium de type TDMA. Le TDMA divise le temps en plusieurs niveaux hiérarchiques de divisions temporelles que nous décrivons pas la suite en relation avec la Fig. 5. Cette technique d'accès au medium nécessite une synchronisation temporelle au niveau de chaque nœud du réseau de communication (*i.e.* au niveau de la station de commande 10 et des drones 3A et 3B) pour éviter tout chevauchement temporel. Le réseau de communication de la Fig. 1 utilise une topologie centralisée dans laquelle la station de commande 10 agit comme un nœud *maître,* c'est-à-dire que la station de commande 10 cadence temporellement l'ensemble du réseau. Les autres nœuds (*i.e.* les drones 3A et 3B) sont *esclaves* du nœud maître et se calent temporellement sur une référence temporelle donnée par le nœud maître.

La **Fig. 2** illustre schématiquement un exemple de zone de portée autour du système antennaire 11 de la station de commande 10.

La zone de portée autour du système antennaire 11 peut être vue schématiquement comme une coupole posée sur un cylindre horizontal ayant pour centre le système antennaire. Cette zone de portée comprend 7 secteurs. Les six antennes sectorielles 11A, 11B, 11C, 11D, 11E et 11F définissent respectivement six secteurs 21A, 21B, 21C, 21D, 21E et 21F. Chacun des 6 secteurs 21A, 21B, 21C, 21D, 21E et 21F possède une forme semi-pyramidale d'azimut « 60° » et de « +8° » d'élévation. Toutes les formes pyramidales partagent un même sommet situé au niveau du système antennaire 11. Les secteurs 21A, 21B, 21C, 21D, 21E et 21F forment un secteur combiné de « 360° » d'azimut et de « +8° » d'élévation inscrit dans le cylindre horizontal. La partie restante de l'ensemble formé par la coupole et le cylindre est le secteur 20 couvert par l'antenne omnidirectionnelle 12.

Dans l'exemple de la Fig. 2, le drone 3A est situé dans le secteur 21D couvert par l'antenne 11D et le drone 3B est situé dans le secteur 20 couvert par l'antenne 12. On se rend alors compte que, en fonction de la position d'un drone dans la zone de portée du système antennaire 11, chaque antenne n'offre pas la même capacité de communication avec ledit drone.

On note que la Fig. 2 représente une vision théorique d'un découpage en secteur d'une zone de portée et qu'en réalité la zone de portée d'une antenne est un lobe d'émission ayant une intersection non nulle avec des lobes d'émission d'autres antennes de son voisinage.

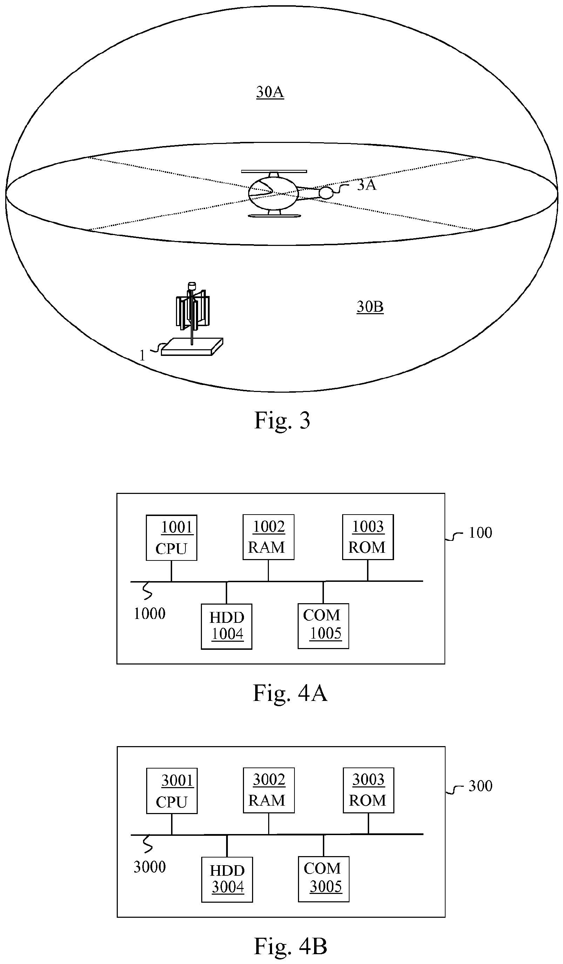

La **Fig. 3** illustre schématiquement une zone de portée autour d'un système antennaire d'un drone.

La zone de portée autour du système antennaire d'un drone peut être représentée par une sphère. Les antennes omnidirectionnelles du système antennaire de chaque drone découpent ladite sphère en deux secteurs semi-hémisphériques (*i.e.* deux demi-sphères) 30A et 30B séparées par un plan horizontal. Dans l'exemple de la Fig. 3, le système antennaire 11 de la station de commande 10 se situe dans le secteur 30B.

Dans le système de drones 1, une seule antenne du système antennaire 11 et une seule antenne d'un drone émettent ou reçoivent à la fois. Une procédure de sélection de l'antenne du système antennaire 11 est mise en œuvre périodiquement par le module de traitement 100 pour déterminer quelle antenne offre la meilleure qualité de communication entre la station de commande 10 et le drone 3A (respectivement le drone 3B) à un instant donnée. De même, une procédure de sélection d'une antenne de drone est mise en œuvre périodiquement par un module de traitement 300 compris dans chaque drone (3A ou 3B) pour déterminer quelle antenne offre la meilleure qualité de communication entre la station de commande 10 et ledit drone à un instant donnée.

La **Fig. 4A** illustre schématiquement un exemple d'architecture matérielle du module de traitement 100 compris dans la station de commande 10.

Selon l'exemple d'architecture matérielle représenté à la Fig. 4A, le module de traitement 100 comprend alors, reliés par un bus de communication 1000 : un processeur ou CPU (« Central Processing Unit » en anglais) 1001 ; une mémoire vive RAM (« Random Access Memory » en anglais) 1002 ; une mémoire morte ROM (« Read Only Memory » en anglais) 1003 ; une unité de stockage telle qu'un disque dur ou un lecteur de support de stockage, tel qu'un lecteur de cartes SD (« Secure Digital » en anglais) 1004 ; au moins une interface de communication 1005 permettant au module de traitement 100 de communiquer avec d'autres modules ou dispositifs. Par exemple l'interface de communication 1005 permet au module de traitement 100 de communiquer avec d'autres modules de la station de commande 10 tels qu'un module de commutation d'antennes permettant de sélectionner une antenne à utiliser à un instant donné ou avec d'autres dispositifs tels que les drones 3A et 3B.

Le processeur 1001 est capable d'exécuter des instructions chargées dans la RAM 1002 à partir de la ROM 1003, d'une mémoire externe (non représentée), d'un support de stockage (tel qu'une carte SD), ou d'un réseau de communication. Lorsque le module de commande 10 est mis sous tension, le processeur 1001 est capable de lire de la RAM 1002 des instructions et de les exécuter. Dans un mode de réalisation, ces instructions forment un programme d'ordinateur causant la mise en œuvre de communications entre la station de commande 10 et chaque drone du système de drones 1 et d'au moins une partie d'un procédé permettant de discriminer des communications montantes et descendantes.

La **Fig. 4B** illustre schématiquement un exemple d'architecture matérielle d'un module de traitement 300 compris dans un drone tel que le drone 3A ou le drone 3B.

Selon l'exemple d'architecture matérielle représenté à la Fig. 4B, le module de traitement 300 comprend alors, reliés par un bus de communication 3000 : un processeur ou CPU (« Central Processing Unit » en anglais) 3001 ; une mémoire vive RAM (« Random Access Memory » en anglais) 3002 ; une mémoire morte ROM (« Read Only Memory » en anglais) 3003 ; une unité de stockage telle qu'un disque dur ou un lecteur de support de stockage, tel qu'un lecteur de cartes SD (« Secure Digital » en anglais) 3004 ; au moins une interface de communication 3005 permettant au module de traitement 300 de communiquer avec d'autres modules ou dispositifs. Par exemple l'interface de communication 3005 permet au module de traitement 300 de communiquer avec d'autres modules tels qu'un module de commutation d'antennes permettant de sélectionner une antenne à utiliser à un instant donné ou de communiquer avec la station de commande 10.

Le processeur 3001 est capable d'exécuter des instructions chargées dans la RAM 3002 à partir de la ROM 3003, d'une mémoire externe (non représentée), d'un support de stockage (tel qu'une carte SD), ou d'un réseau de communication. Lorsqu'un drone (3A ou 3B) est mis sous tension, le processeur 3001 est capable de lire de la RAM 3002 des instructions et de les exécuter. Dans un mode de réalisation, ces instructions forment un programme d'ordinateur causant la mise en œuvre de communications entre le drone comprenant le module de traitement 300 et la station de commande 10 et d'au moins une partie d'un procédé permettant de discriminer des communications montantes et descendantes.

Les procédés mis en œuvre par le module de traitement 100 et le module de traitement 300 peuvent être implémentés sous forme logicielle par exécution d'un ensemble d'instructions par une machine programmable, par exemple un DSP (« Digital Signal Processor » en anglais) ou un microcontrôleur, ou être implémentés sous forme matérielle par une machine ou un composant dédié, par exemple un FPGA (« Field-Programmable Gate Array » en anglais) ou un ASIC (« Application-Specific Integrated Circuit » en anglais).

La **Fig. 6** illustre schématiquement un module d'émission selon l'invention.

L'interface de communication 1005 de la station de commande 10 et l'interface de communication 3005 de chaque drone 3A et 3B comprennent chacune un module d'émission identique au module d'émission décrit en relation avec la Fig. 6.

Le module d'émission comprend :

- un module de multiplexage 601 ;
- un module de formation de blocs de données (appelés « burst » en terminologie anglo-saxonne) 602 ;
- un module de codage canal 603 comprenant un module 6031 de codage LDPC (contrôle de parité de faible densité : « Low Density Parity Check » en terminologie anglo-saxonne) et un module 6032 de codage BCH (Bose, Ray-Chaudhuri et Hocquenghem, selon les noms des inventeurs) ;
- un module 604 de filtrage en bande de base tel qu'un filtre gaussien ;
- un module 605 de modulation MSK (modulation de phase continue à déplacement minimum : « Minimum Shift Keying » en terminologie anglo-saxonne). La combinaison du module de filtrage utilisant un filtre gaussien et du module de modulation MSK créé un module de modulation GMSK (modulation de phase continue à déplacement minimum Gaussien : « Gaussian Minimum Shift Keying » en terminologie anglo-saxonne);
- un module radio-fréquence 606 comprenant un module de transposition de la bande de base vers la bande de fréquence militaire [4.4 GHz ; 4.9 GHz] ou la bande civile [5.031 GHz ; 5.091 GHz], un module d'amplification à forte puissance (« High Power amplifier (HPA) » en terminologie anglo-saxonne), un filtre d'émission et un commutateur (« switch » en terminologie anglo-saxonne) permettant une sélection entre le module d'émission et un module de réception.
- Un système antennaire 607 correspondant au système antennaire 11 pour la station de commande 10 ou au système antennaire du drone pour le drone 3A et le drone 3B.

La modulation choisie (*i.e.* la modulation GMSK) permet de réaliser un codage canal de type convolutionnel du fait d'un effet mémoire introduit par le filtre gaussien. La modulation GMSK est particulièrement adaptée pour atteindre les débits souhaités sur chaque canal prévu dans la bande de fréquence utilisée (*i.e.* la bande de fréquence militaire [4.4 GHz ; 4.9 GHz] ou la bande civile [5.031 GHz ; 5.091 GHz]).

Comme décrit plus haut, le module de codage canal 603 comprend deux sous-modules : un module de codage LDPC 6031 et un module de codage BCH 6032.

Dans un mode de réalisation, le module de codage LDPC 6031 peut être suivi par un module d'entrelacement temporel de type ligne/colonne. L'entrelacement se fait sur les données utiles comprises dans chaque sous-intervalle temporel d'un intervalle temporel (timeslot).

Dans un mode de réalisation, le module d'émission comprend un module de sécurité de transmission (« TRANsmission SECurity (TRANSEC) » en terminologie anglo-saxonne) utilisant par exemple une technique de sauts en fréquence (étalement de spectre par évasion de fréquence, « Frequency Hopping Spread Spectrum (FHSS) » en terminologie anglo-saxonne).

La **Fig. 7** illustre schématiquement un module de réception. L'interface de communication 1005 de la station de commande 10 et l'interface de communication 3005 de chaque drone 3A et 3B comprennent chacune un module de réception identique au module de réception décrit en relation avec la Fig. 7.

Le module de réception comprend :

- un système antennaire 701 correspondant au système antennaire 11 pour la station de commande 10 ou au système antennaire du drone pour le drone 3A et le drone 3B. On note que, pour la station de commande 10 et chaque drone, les systèmes antennaires 607 et 701 sont en réalité un seul et même système antennaire d'émission et de réception ;
- un filtre de réception 702 permettant une sélection d'une bande de fréquence. Ce filtre de réception permet par exemple de sélectionner la bande de fréquence militaire [4.4 GHz ; 4.9 GHz] ou la bande civile [5.031 GHz ; 5.091 GHz] ;
- un amplificateur faible bruit 703 (« Low Noise Amplifier : LNA » en terminologie anglo-saxonne) ;
- un module de transposition en fréquence 704 de la bande de fréquence militaire [4.4 GHz ; 4.9 GHz] ou la bande civile [5.031 GHz ; 5.091 GHz] vers la bande de base ;
- un module de filtrage en bande de base 705 permettant d'assurer une sélectivité en bande de base ;

- un module d'égalisation de signal en bande de base 706 permettant de s'affranchir en partie des phénomènes de multi-trajets ;
- un module de convolution 707 utilisé pour discriminer les communications montantes et les communications descendantes selon un procédé que nous décrivons par la suite ;
- un module de synchronisation en fréquence et en phase 708 ;
- un module de démodulation GMSK 709 ;
- un module de décodage BCH 7101 ;
- un module de décodage LDPC 7102 ;
- un module de démultiplexage des flux de données 711 ;

On note que lorsque, dans le module d'émission, le module de codage LDPC 6031 est suivi d'un module d'entrelacement temporel de type ligne/colonne, le module de décodage LDPC 7102 est précédé d'un module de désentrelacement temporel de type ligne/colonne.

Par ailleurs, lorsque le module d'émission comprend un module de sécurité de transmission (TRANSEC), le module de réception comprend un module de sécurité de transmission réciproque.

La **Fig. 5** illustre schématiquement une technique d'accès au médium selon l'invention, de type accès multiple à répartition dans le temps divisant le temps en plusieurs niveaux hiérarchiques de divisions temporelles.

Le TDMA divise le temps en un premier niveau de hiérarchie appelé *époque* (« Epoch » en terminologie anglo-saxonne) (non représenté dans la Fig. 5) par exemple d'une durée de « 1s ».

Dans l'exemple du système de drones 1, une époque est divisée en « 5 » trames par exemple d'une durée de « 200 ms ». Une durée de trame de « 200 ms » permet de disposer d'un temps de latence dans une communication entre un drone et la station de commande 10 compatible avec une transmission de données audio de conversation.

En plus d'être organisées en époques, les trames utilisées dans le système de drones 1 sont organisées en une succession de groupes de trames consécutives. Un groupe de trames 50 est représenté en Fig. 5. Le groupe de trames 50 comprend un nombre de trames égal au nombre d'antennes du système antennaire 11 de la station de commande (*i.e.* sept) multiplié par le nombre de drones en activité dans le système de drones 1 (*i.e.* deux drones). Il y a donc autant de trames dans un groupe de trames que de couples possibles formés d'une antenne du système antennaire 11 et d'un drone. Le groupe de trames 50 comprend donc quatorze trames 501 à 514. Une trame 414 appartient à un groupe de quatorze trames précédent le groupe de trames 50 et une trame 601 appartient à un groupe de quatorze trames suivant le groupe de trames 50. Nous verrons par la suite que l'organisation en groupes de trames permet de définir dans le système de drones 1 quelle antenne du système antennaire 11 doit émettre un signal en direction d'un drone donnée et ainsi de mettre en œuvre une procédure de sélection de l'antenne offrant la meilleure qualité de transmission entre la station de commande 10 et ledit drone.

La Fig. 5 donne un détail de la trame 502 comprise dans le groupe de trames 50, toutes les trames utilisées dans le système de drones 1 ayant une structure de trame identique. La trame 502 est divisée en une pluralité d'intervalles temporels (« timeslot » en terminologie anglo-saxonne). La pluralité d'intervalles temporels comprend un premier intervalle 500A permettant à la station de commande 10 d'émettre un premier signal appelé *balise* (« beacon » en terminologie anglo-saxonne) permettant à chaque drone de se synchroniser sur une référence temporelle donnée par la station de commande 10. C'est grâce à cette balise que les drones du système de drones 1 peuvent se synchroniser avec la station de commande 10. Par ailleurs, comme nous le décrivons par la suite, la position de la trame dans le groupe de trames indique à quel drone la balise est destinée. On considère donc que le premier signal désigne un drone parmi les drones du système de drones 1.

La pluralité d'intervalles temporels comprend de plus un deuxième intervalle 500B permettant au drone désigné par le premier signal d'émettre un deuxième signal lui permettant ainsi d'acquitter sa présence dans le système de drones 1.

Les intervalles 500A et 500B sont suivis d'une succession d'intervalles 500C. La succession d'intervalles 500C comprend un nombre d'intervalles dépendant du nombre maximum de drones pouvant être contrôlés dans le système de drones 1 (*i.e.* quatre drones). Dans le TDMA utilisé dans le système de drones 1, chaque drone pouvant potentiellement être contrôlé est associé à « 2 » intervalles consécutifs dans la succession d'intervalles : un intervalle durant lequel le drone peut recevoir des données en provenance de la station de commande 10 et un intervalle durant lequel le drone peut émettre des données en direction de la station de commande 10. Chaque drone et la station de commande 10 partagent une information décrivant une allocation des intervalles 500A, 500B et de la succession d'intervalles 500C dans une trame. Dans l'exemple décrit en relation avec la Fig. 5, la succession d'intervalles comprend huit intervalles. Le système de communication du système de drones 1 peut donc gérer jusqu'à quatre drones simultanément.

L'information décrivant l'allocation prend la forme d'une table d'allocation partagée par tous les nœuds du réseau. Cette table d'allocation peut être fixe ou être mise à jour de manière synchrone dans tous les nœuds du réseau pour, par exemple, prendre en compte des arrêts de drones ou des arrivées de nouveaux drones dans le système de drones 1.

Au moins une table d'allocation est transmise durant chaque trame dans l'intervalle 500A. Ainsi, chaque nœud recevant une table d'allocation pendant une trame connait l'allocation des intervalles dans ladite trame. En utilisant cette table d'allocation, chaque drone sait dans quel intervalle de la trame il doit émettre en direction de la station de commande 10 et dans quel intervalle de la trame il peut recevoir des données en provenance de la station de commande 10. De même, la station de commande 10 sait dans quel intervalle elle peut émettre des données en direction d'un drone donné et dans quel intervalle d'une trame elle peut recevoir des données en provenance d'un drone donné. Par exemple, dans la Fig. 5, la succession d'intervalles 500C comprend un premier intervalle utilisé pour communiquer de la station de commande 10 vers le drone 3A, un deuxième intervalle utilisé pour communiquer du drone 3A vers la station de commande 10, un troisième intervalle utilisé pour communiquer de la station de commande 10 vers le drone 3B et un quatrième intervalle utilisé pour communiquer du drone 3B vers la station de commande 10. Les quatre derniers intervalles sont laissés libres par exemple pour deux autres drones éventuels.

Chaque intervalle possède par exemple une durée de « 20 ms » correspondant à une division d'une trame en « 10 » intervalles (timeslot). Un intervalle de « 20 ms » permet de contenir un bloc LDPC complet, ce qui permet de limiter des latences de transmission de chacun des nœuds.

La Fig. 5 donne de plus un détail d'un intervalle (timeslot) de la trame 502, chaque intervalle d'une trame ayant une structure identique. Un intervalle d'une trame comprend un sous-intervalle 5000A permettant de prendre en compte des temps de propagation dans le système de drones 1, et un ensemble de sous-intervalles 5000B (appelés « burst interval » en terminologie anglo-saxonne) durant lesquelles des blocs de données (« burst » en terminologie anglo-saxonne) sont transmis. Le temps de propagation pour atteindre un des drones 3A ou 3B depuis la station de commande 10 à une distance maximale typique de « 200 km » pour des signaux radioélectriques utilisés dans la bande de fréquence militaire [4.4 GHz ; 4.9 GHz] ou la bande civile [5.031 GHz ; 5.091 GHz] est de l'ordre de « 0.8 ms ». Dans le système de drones 1, chaque intervalle comprend un ensemble de « 5 » sous-intervalles 5000B. Par conséquent chaque sous-intervalle possède une durée de « 3.84 ms ». Une durée de sous-intervalle de « 3.84 ms » permet d'obtenir un canal considéré comme stationnaire pendant la durée d'un sous-intervalle.

La Fig. 5 donne par ailleurs un détail d'un sous-intervalle d'un intervalle (timeslot) d'une trame, chaque sous-intervalle ayant une structure identique. Chaque sous-intervalle comprend une période 50000A dite *temps de garde du sous-intervalle* (« burst guard time » en terminologie anglo-saxonne), une période 50000B dite *temps de montée des amplificateurs haute puissance* (« High Power Amplifier (HPA) ramping » en terminologie anglo-saxonne) et une période 50000F dite *temps de descente des amplificateurs haute puissance* (« High Power Amplifier (HPA) ramping off » en terminologie anglo-saxonne) destinées à prendre en compte des temps de réaction de composants électroniques d'un drone 3A ou 3B ou de la station de commande 10. Une période 50000C (appelée *préambule séquence*) est utilisée pour transmettre un préambule permettant au nœud récepteur de faire une estimation du canal afin de réaliser des synchronisations fréquentielles, de phase, de rythme et des égalisations de signaux de réception. Ces synchronisations permettent de synchroniser des lectures d'échantillons suivant la période 50000C dans le sous-intervalle. En outre, comme nous le verrons pas la suite, ce préambule est utilisée pour identifier les communications montantes des communications descendantes. Une période 50000D (appelée *mode sélection*) permet de transmettre une information représentative d'un numéro de sous-intervalle pour assurer une synchronisation temporelle de chacun des drones sur la station de commande. Par ailleurs, ce numéro de sous-intervalle permet à chacun des nœuds de déterminer s'il est concerné par ledit sous-intervalle pour émettre ou recevoir des données. Les données représentatives du numéro de sous-intervalle transmises au cours de la période 50000D sont codées par le module de codage BCH 6032 indépendamment de toutes autres données du sous-intervalle. Une période 50000E (appelée *bloc de données*) permet de transmettre des données utiles. Les données utiles transmises au cours de la période 50000E sont codées par le module de codage LDPC 6031. L'encodage indépendant des données correspondant au numéro de sous-intervalle permet de décoder ces données sans avoir à décoder les données utiles. De cette manière, lors d'une réception, un module de traitement (100 ou 300) est capable de déterminer si des données utiles transmises dans un bloc de données lui sont destinées ou pas, sans avoir à décoder lesdites données utiles. Les données transmises dans la période 50000C, 50000D et 50000E forment un paquet de données.

Comme nous l'avons vu plus haut, chaque groupe de trames utilisé dans le système de drones 1 est organisé suivant une structure de groupe associant chaque trame à un couple formée d'une antenne de la station de commande 10 et d'un drone, chaque couple possible étant associé à une trame différente en fonction de la position de ladite trame dans le groupe. Par exemple, dans la Fig. 5, les trames 501 à 507 sont associées au drone 3A et les trames 508 à 514 sont associées au drone 3B. La trame 501 est associée à l'antenne 11A, la trame 502 est associée à l'antenne 11B, la trame 503 est associée à l'antenne 11C, la trame 504 est associée à l'antenne 11D, la trame 505 est associée à l'antenne 11E, la trame 506 est associée à l'antenne 11F, et la trame 507 est associée à l'antenne 12. La trame 508 est associée à l'antenne 11A, la trame 509 est associée à l'antenne 11B, la trame 510 est associée à l'antenne 11C, la trame 511 est associée à l'antenne 11D, la trame 512 est associée à l'antenne 11E, la trame 513 est associée à l'antenne 11F, et la trame 514 est associée à l'antenne 12.

Chaque nœud, connaissant la durée de chaque trame et étant synchronisé avec la station de commande 10, est capable de déterminer quand débute une trame, même lorsqu'il ne reçoit pas de données pour certaines trames. Par ailleurs, à partir des informations contenues dans chaque table d'allocation, chaque nœud est capable de déterminer la structure de groupe. En effet, à partir du nombre d'intervalles attribués dans une trame, chaque nœud est capable de déterminer le nombre de drones actifs dans le système de drones 1. Chaque drone connaissant le nombre d'antennes du système antennaire 11, il est capable de déterminer le nombre de trames dans un groupe de trames. Dans un mode de réalisation, chaque nœud connait une structure de groupe pour chaque nombre de drones actifs possible dans le système de drones 1 (*i.e.* de « 1 » à « 4 » drones actifs). Par ailleurs, dans un mode de réalisation, une information représentative d'une position d'une trame dans un groupe de trames est transmise dans l'intervalle 500A de chaque trame. Ainsi à partir de la position d'une trame en cours dans un groupe de trames, chaque nœud est capable de déterminer quelle est l'antenne de la station de commande 10 émettrice d'une balise et à quel drone ladite balise est destinée. Ces informations sur la structure de groupe permettent, entre autre, au module de traitement 100 de la station de commande 10 de mettre en œuvre un procédé de sélection d'antenne, lui permettant de sélectionner parmi les antennes du système antennaire 11, l'antenne offrant la meilleure qualité de communication avec un drone donné. En effet, en reprenant l'exemple de la Fig. 5, pour chaque balise transmise dans les trames 501 à 507, le module de traitement 100 reçoit un signal d'acquittement de la part du drone 3A contenant une information représentative d'une qualité de réception de la balise mesurée par le drone. Une information représentative d'une qualité de réception est par exemple une mesure de RSSI (« Received Signal Strength Indication » en terminologie anglo-saxonne) mesurée lors d'une réception d'une balise. A partir des informations représentatives d'une qualité de réception obtenues, le module de traitement 100 détermine quelle antenne offre la meilleure qualité de communication et sélectionne cette antenne pour un nombre de trames prédéterminé suivant la trame 507. Par exemple, le module de traitement 100 sélectionne une antenne pour le drone 3A jusqu'à émission de la prochaine trame contenant une balise désignant le drone 3A. Dans l'exemple de la Fig. 1 avec deux drones dans le système de drones 1, cela revient à sélectionner une antenne pendant « 7 » trames. Le module de traitement 100 fait de même pour le drone 3B à partir des trames 508 à 514 pour sélectionner la meilleure antenne pour communiquer avec le drone 3B.

Dans un réseau de communication classique d'un système de drones les communications montantes et descendantes sont discriminées après démodulation et décodage canal dans la couche liaison de données et/ou les couches suivantes du modèle OSI (« Open System Interconnection » en terminologie anglo-saxonne, interconnexion en système ouvert). Il est donc nécessaire de démoduler et décoder chaque signal reçu afin de déterminer s'il s'agit d'une liaison montante ou descendante.

Afin d'éviter ces démodulations et ces décodages canal, le système de drone 1 utilise dans chaque communication montante un préambule, dit préambule montant, orthogonal au préambule, dit préambule descendant, utilisés dans chaque communication descendante.

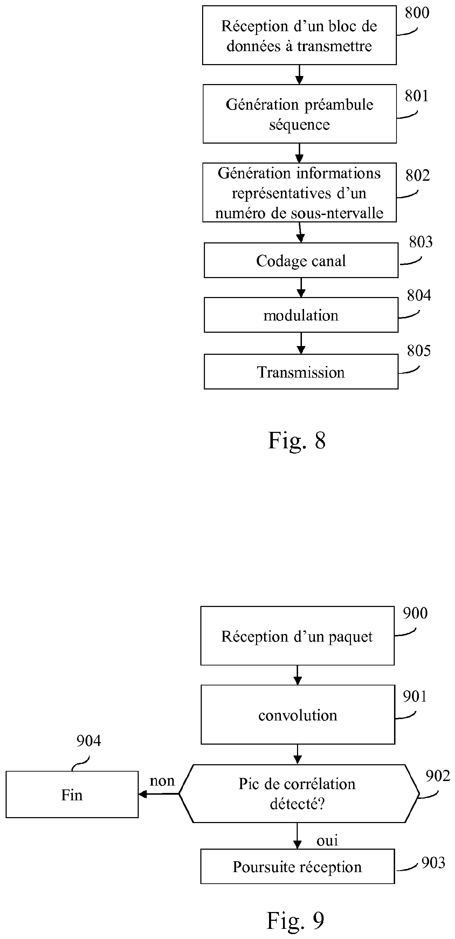

La **Fig. 8** illustre schématiquement un procédé de transmission d'un paquet de données selon l'invention.

Le procédé décrit en relation avec la Fig. 8 est mis en œuvre lors de chaque transmission d'un paquet de données par le module d'émission compris dans l'interface de communication 1005 de la station de commande 10 ou l'interface de communication 3005 de chaque drone 3A et 3B. Ce procédé est mis en œuvre par le module de traitement 100 ou 300 en utilisant les modules constituant le module d'émission.

Dans une étape 800, le module de traitement 100 (respectivement 300) détecte une réception d'un bloc de données à transmettre par le module d'émission.

Dans une étape 801, le module de traitement 100 (respectivement 300) utilise le module de formation de blocs de données 602 pour générer un préambule montant (respectivement un préambule descendant). Dans un mode de réalisation, le module de formation de blocs de données 602 de la station de commande 10 (respectivement du drone 3A ou du drone 3B) génère le même préambule pour chaque paquet de données. Par contre, le module de formation de blocs de données 602 de la station de commande 10 génère des préambules montant orthogonaux aux préambules descendant générés par le module de formation de blocs de données 602 des drones 3A et 3B.

Le préambule montant et le préambule descendant sont des séquences binaires pseudo aléatoires présentant de bonnes propriétés d'autocorrélation.

Un exemple de séquence binaire $S_{bin}^{mont}$ pseudo aléatoire pouvant faire office de préambule pour des communications montantes est la suivante :

$$S_{bin}^{mont} = 0\ 0\ 1\ 0\ 0\ 1\ 0\ 1\ 1\ 1\ 0\ 0\ 0\ 0\ 1\ 0\ 0\ 0\ 1\ 0\ 0\ 1\ 0\ 1\ 1\ 1\ 0\ 0\ 1\ 0\ 1\ 1\ 0\ 1\ 1\ 1\ 0\ 1\ 1\ 1\ 1\ 0\ 0\ 0\ 1\ 0\ 1\ 1\ 0\ 1$$

Un exemple de séquence binaire $S_{bin}^{desc}$ pseudo aléatoire pouvant faire office de préambule pour des communications descendantes est la suivante :

$S_{bin}^{desc}$ = 0 1 0 0 0 0 1 1 1 0 1 1 1 0 1 0 0 1 0 0 0 0 1 1 1 0 0 1 0 0 0 1 1 1 1 0 1 1 0 1 0 0 0 1 0 0 0 1 1 1

Dans une étape 802, le module de formation de blocs de données 602 génère une information représentative d'un numéro de sous-intervalle destinée à être transmise dans une période 50000D.

Dans une étape 803 un codage canal est appliqué à l'information représentative d'un numéro de sous-intervalle et au bloc de données à transmettre. De manière plus détaillé, un codage BCH est appliqué par le module de codage BCH 6032 à l'information représentative du numéro de sous-intervalle et un codage LDPC est appliqué par le module de codage LDPC 6031 au bloc de données.

Dans une étape 804, un paquet de données est formé comprenant le préambule, l'information représentative d'un numéro de sous-intervalle encodée et le bloc de données encodé. Le paquet ainsi formé est alors modulé par le module de modulation GMSK (*i.e.* le module de filtrage Gaussien 604 et le module de modulation MSK 605).

Lors d'une étape 805, le paquet de données est transmis.

La **Fig. 9** illustre schématiquement un procédé de réception d'un paquet de données selon l'invention.

Le procédé décrit en relation avec la Fig. 9 est mis en œuvre lors de chaque réception d'un paquet de données par le module de réception compris dans l'interface de communication 1005 de la station de commande 10 (respectivement l'interface de communication 3005 de chaque drone 3A et 3B). Ce procédé est mis en œuvre par le module de traitement 100 (respectivement le module de traitement 300) en utilisant les modules constituant le module de réception.

Lors d'une réception d'un paquet de données, le module de traitement 100 (respectivement le module de traitement 300) détermine si ledit paquet a été transmis dans le cadre d'une communication montante ou descendante en fonction d'un résultat d'une convolution entre ledit paquet de données modulé réçu avec un préambule de référence modulé suivant la modulation GMSK, ledit préambule de référence correspondant au préambule montant ou au préambule descendant suivant que le procédé est mis en œuvre par le module de traitement 100 de la station de commande ou le module de traitement 300 d'un drone 3A ou 3B.

Dans une étape 900, le module de réception reçoit un paquet de données modulé.

Dans une étape 901, le module de traitement 100 (respectivement 300) applique une convolution au paquet de données modulé reçu en utilisant le module de convolution 707. L'étape de convolution 901 est mise en œuvre préalablement à la synchronisation par le module de synchronisation en fréquence et en phase 708 et à la démodulation par le module de démodulation GMSK 709. Lors de l'étape 901, le module de traitement 100 (respectivement 300) applique une convolution entre le paquet de données modulé reçu et un préambule modulé de référence conservé en mémoire. Le préambule modulé de référence est par exemple stocké dans l'unité de stockage 1004 du module de traitement 100 (respectivement dans l'unité de stockage 3004 du module de traitement 300). Le préambule modulé de référence correspond à un préambule descendant pour la station de commande 10 (respectivement correspond à un préambule montant pour le drone 3A ou 3B).

Dans une étape 902, le module de traitement vérifie un résultat de la convolution. Lorsque, lors d'une réception d'un paquet de données modulé, la convolution entre ledit paquet modulé reçu et le préambule modulé de référence, aucune corrélation n'est détectée (*i.e.* la convolution entre ledit paquet modulé et le préambule de référence modulé ne permet pas d'observer un pic de corrélation) le module de traitement 100 (respectivement 300) en déduit que le préambule compris dans ledit paquet est orthogonal au préambule recherché et donc que ledit paquet ne lui est pas destiné. Le paquet de données est alors rejeté. Inversement, lorsque, lors d'une réception d'un paquet de données modulé, la convolution entre ledit paquet modulé et le préambule modulé de référence, une corrélation est détectée (*i.e.* la convolution entre ledit paquet modulé et le préambule modulé conservé en mémoire permet d'observer un pic de corrélation), le module de traitement (100 ou 300) en déduit que le paquet de données lui est destiné.

Dans un mode de réalisation, la convolution est implémentée sous forme d'un filtre à réponse impulsionnelle finie (« Finite Impulse Response Filter (FIR filter) » en terminologie anglo-saxonne).

On note qu'un pic de corrélation est considéré comme observé lorsque lors d'un calcul de convolution par le module de convolution 707, une valeur de corrélation supérieure ou égale à un seuil de corrélation prédéfini est obtenue.

Lorsqu'un pic de corrélation est observé, le module de traitement 100 (respectivement le module de traitement 300) poursuit le procédé de réception en mettant en œuvre une étape de synchronisation par le module de synchronisation en fréquence et en phase 708, puis en procédant à la démodulation du paquet par le module de démodulation 709 lors d'une étape 903. Sinon, dans une étape 904, le module de traitement 100 (respectivement 300) rejette le paquet sans appliquer aucun traitement additionnel. En d'autre termes, lorsque le module de traitement 100 de la station de commande 10 considère que le paquet de données a été transmis dans le cadre d'une communication montante, il rejette ledit paquet. Lorsque le module de traitement 100 de la station de commande 10 considère que le paquet de données a été transmis dans le cadre d'une communication descendante, il poursuit la procédure de réception du paquet et applique notamment une démodulation audit paquet de données. Lorsque le module de traitement 300 du drone 3A (ou 3B) considère que le paquet de données a été transmis dans le cadre d'une communication descendante, il rejette ledit paquet. Lorsque le module de traitement 300 du drone 3A (ou 3B) considère que le paquet de données a été transmis dans le cadre d'une communication montante, il poursuit la procédure de réception du paquet et applique notamment une démodulation audit paquet de données.

## Revendications

**1.** Procédé mis en œuvre dans un système de dispositifs mobiles sans pilote comprenant une station de commande et au moins un dispositif mobile sans pilote, la station de commande communiquant avec chaque dispositif mobile sans pilote en utilisant une technique d'accès au médium de type accès multiple à répartition dans le temps dans laquelle chaque communication se fait dans des trames, le procédé étant **caractérisé en ce que** :

chaque trame est divisée en une pluralité d'intervalles temporels, chaque intervalle étant divisé en une pluralité de sous-intervalles, chaque sous-intervalle étant divisé en une pluralité de périodes permettant de transmettre des données sous forme de paquets de données, chaque paquet de données étant modulé par une modulation prédéfinie avant sa transmission, une première période de la pluralité de périodes permettant de transmettre un préambule permettant à un récepteur dudit préambule de faire une estimation de canal afin de réaliser des synchronisations fréquentielles, de phase, de rythme et des égalisations de signaux de réception, ledit préambule étant utilisé en outre pour identifier les communications montantes des communications descendantes, et une deuxième période permettant de transmettre un bloc de données ;
et **en ce que** le procédé comprend :

utiliser dans chaque communication montante de la station de commande (10) vers un dispositif mobile sans pilotes (3A, 3B), un préambule, dit préambule montant, orthogonal au préambule, dit préambule descendant, utilisé dans chaque communication descendante d'un dispositif mobile sans pilote (3A, 3B) vers la station de commande (10) ; et,
lors d'une réception d'un paquet de données modulé, déterminer si ledit paquet a été transmis dans le cadre d'une communication montante ou descendante en fonction d'un résultat d'une convolution entre ledit paquet avec un préambule de référence modulé suivant la modulation prédéfinie, ledit préambule de référence correspondant au préambule montant ou au préambule descendant.

**2.** Procédé selon la revendication 1, **caractérisé en ce que** lorsque lors d'un calcul de convolution (902) entre ledit paquet et le préambule descendant modulé, une valeur de corrélation supérieure ou égale à un premier seuil prédéfini est obtenue, ledit paquet est considéré comme ayant été transmis dans le cadre d'une communication descendante, lorsque lors d'un calcul de convolution entre ledit paquet et le préambule montant modulé, une valeur de corrélation supérieure ou égale à un second seuil prédéfini est obtenue, ledit paquet est considéré comme ayant été transmis dans le cadre d'une communication montante.

**3.** Procédé selon la revendication 2, **caractérisé en ce que** lorsque lors d'un calcul de convolution (902) entre ledit paquet et le préambule descendant modulé, une valeur de corrélation inférieure au premier seuil prédéfini est obtenue, ledit paquet est considéré comme n'ayant pas été transmis dans le cadre d'une communication descendante, lorsque lors d'un calcul de convolution entre ledit paquet et le préambule montant modulé, une valeur de corrélation inférieure au second seuil prédéfini est obtenue, ledit paquet est considéré comme n'ayant pas été transmis dans le cadre d'une communication montante.

**4.** Procédé selon la revendication 2 ou 3, **caractérisé en ce que** lorsque la station de commande (10) considère qu'un paquet de données modulé reçu a été transmis dans le cadre d'une communication montante, la station de commande (10) rejette ledit paquet, lorsque la station de commande (10) considère qu'un paquet de données modulé reçu a été transmis dans le cadre d'une communication descendante, la station de commande (10) poursuit une procédure de réception dudit paquet comprenant une démodulation dudit paquet,

**5.** Procédé selon la revendication 2 ou 3, **caractérisé en ce que** lorsqu'un dispositif mobile sans pilote (3A, 3B) considère qu'un paquet de données modulé reçu a été transmis dans le cadre d'une communication descendante, le dispositif mobile sans pilote (3A, 3B) rejette ledit paquet, lorsque le dispositif mobile sans pilote (3A, 3B) considère qu'un paquet de données modulé reçu a été transmis dans le cadre d'une communication montante, la dispositif mobile sans pilote (3A, 3B) poursuit une procédure de réception dudit paquet comprenant une démodulation dudit paquet.

6. Procédé selon l'une quelconque des revendications précédentes **caractérisé en ce que** le préambule montant et le préambule descendant sont des séquences binaires pseudo-aléatoires.

7. Procédé selon l'une quelconque des revendications précédentes **caractérisé en ce que**, la convolution est implémentée sous forme d'un filtre à réponse impulsionnelle finie.

8. Système de dispositifs mobiles sans pilote comprenant une station de commande et au moins un dispositif mobile sans pilote, la station de commande communiquant avec chaque drone en utilisant une technique d'accès au médium de type accès multiple à répartition dans le temps dans laquelle chaque communication se fait dans des trames, le système étant **caractérisé en ce que** :

   chaque trame est divisée en une pluralité d'intervalles temporels, chaque intervalle étant divisé en une pluralité de sous-intervalles, chaque sous-intervalle étant divisé en une pluralité de périodes permettant de transmettre des données sous forme de paquets de données, chaque paquet de données étant modulé par une modulation prédéfini avant sa transmission, une première période de la pluralité de périodes permettant de transmettre un préambule permettant à un récepteur dudit préambule de faire une estimation de canal afin de réaliser des synchronisations fréquentielles, de phase, de rythme et des égalisations de signaux de réception, ledit préambule étant utilisé en outre pour identifier les communications montantes des communications descendantes, et une deuxième période permettant de transmettre un bloc de données ;
   et **en ce que** le système comprend :

      des moyens d'insertion pour insérer dans chaque paquet de données transmis dans le cadre d'une communication montante de la station de commande (10) vers un dispositif mobile sans pilotes (3A, 3B), un préambule, dit préambule montant, orthogonal au préambule, dit préambule descendant, inséré dans chaque paquet de données transmis dans le cadre d'une communication descendante d'un dispositif mobile sans pilote (3A, 3B) vers la station de commande (10) ; et ;
      des moyens de détermination pour déterminer, lors d'une réception d'un paquet de données modulé, si ledit paquet a été transmis dans le cadre d'une communication montante ou descendante en fonction d'un résultat d'une convolution entre ledit paquet avec un préambule de référence modulé suivant la modulation prédéfinie, ledit préambule de référence correspondant au préambule montant ou au préambule descendant.

9. Programme d'ordinateur, **caractérisé en ce qu'**il comprend des instructions pour mettre en œuvre, par un dispositif (100, 300), le procédé selon l'une quelconque des revendications 1 à 7, lorsque ledit programme est exécuté par un processeur dudit dispositif (100, 300).

10. Moyens de stockage, **caractérisés en ce qu'**ils stockent un programme d'ordinateur comprenant des instructions pour mettre en œuvre, par un dispositif (100, 300), le procédé selon l'une quelconque des revendications 1 à 7, lorsque ledit programme est exécuté par un processeur dudit dispositif (100, 300).

## Patentansprüche

1. Verfahren für die Ausführung in einem System führerloser mobiler Vorrichtungen, das eine Befehlsstation und wenigstens eine führerlose mobile Vorrichtung umfasst, wobei die Befehlsstation mit jeder führerlosen mobilen Vorrichtung unter Verwendung einer Medienzugriffstechnik des Typs Mehrfachzugriff mit zeitlicher Verteilung kommuniziert, wobei jede Kommunikation in Rahmen erfolgt, wobei das Verfahren **dadurch gekennzeichnet ist, dass**:

   jeder Rahmen in mehrere Zeitintervalle unterteilt ist, jedes Intervall in mehrere Unterintervalle unterteilt ist, jedes Unterintervall in mehrere Perioden unterteilt ist, die die Übertragung von Daten in Form von Datenpaketen ermöglichen, wobei jedes Datenpaket durch eine vor seiner Übertragung im Voraus definierte Modulation moduliert wird, eine erste Periode der mehreren Perioden die Übertragung einer Präambel ermöglicht, die einem Empfänger der Präambel ermöglicht, eine Kanalschätzung vorzunehmen, um Frequenz-, Phasen- und Taktsynchronisationen und Abgleiche von Empfangssignalen auszuführen, die Präambel außerdem verwendet wird, um die Aufwärtsstreckenkommunikationen der Abwärtsstreckenkommunikationen zu identifizieren, und eine zweite Periode die Übertragung eines Datenblocks ermöglicht;
   und dass das Verfahren Folgendes umfasst:

Verwenden in jeder Aufwärtsstreckenkommunikation der Befehlsstation (10) zu einer führerlosen mobilen Vorrichtung (3A, 3B) einer Präambel, die Aufwärts strecken-Präambel genannt wird und zu der Präambel, die Abwärtsstrecken-Präambel genannt wird und in jeder Abwärtsstreckenkommunikation von einer führerlosen mobilen Vorrichtung (3A, 3B) zu der Befehlsstation (10) verwendet wird, orthogonal ist; und beim Empfang eines modulierten Datenpakets Bestimmen, ob das Paket im Verlauf einer Aufwärtsstrecken- oder Abwärtsstreckenkommunikation übertragen worden ist, in Abhängigkeit eines Ergebnisses einer Faltung zwischen dem Paket und einer Referenzpräambel, die entsprechend der im Voraus definierten Modulation moduliert worden ist, wobei die Referenzpräambel der Aufwärtsstrecken-Präambel oder der Abwärtsstrecken-Präambel entspricht.

2. Verfahren nach Anspruch 1, **dadurch gekennzeichnet, dass** dann, wenn bei einer Faltungsberechnung (902) zwischen dem Paket und der modulierten Abwärtsstrecken-Präambel ein Korrelationswert erhalten wird, der größer oder gleich einem im Voraus definierten ersten Schwellenwert ist, für das Paket angenommen wird, dass es im Verlauf einer Abwärtsstreckenkommunikation übertragen worden ist, und dass dann, wenn bei einer Faltungsberechnung zwischen dem Paket und der modulierten Aufwärtsstrecken-Präambel ein Korrelationswert erhalten wird, der größer oder gleich einem zweiten im Voraus definierten Schwellenwert ist, für das Paket angenommen wird, dass es im Verlauf einer Aufwärtsstreckenkommunikation übertragen worden ist.

3. Verfahren nach Anspruch 2, **dadurch gekennzeichnet, dass** dann, wenn bei einer Faltungsberechnung (902) zwischen dem Paket und der modulierten Abwärtsstrecken-Präambel ein Korrelationswert erhalten wird, der kleiner als der erste im Voraus definierte Schwellenwert ist, für das Paket angenommen wird, dass es nicht im Verlauf einer Abwärtsstreckenkommunikation übertragen worden ist, und dass dann, wenn bei einer Faltungsberechnung zwischen dem Paket und der modulierten aufwärtsstrecken-Präambel ein Korrelationswert erhalten wird, der kleiner als der zweite im Voraus definierte Schwellenwert ist, für das Paket angenommen wird, dass es nicht im Verlauf einer Aufwärtsstreckenkommunikation übertragen worden ist.

4. Verfahren nach Anspruch 2 oder 3, **dadurch gekennzeichnet, dass** dann, wenn die Befehlsstation (10) für ein empfangenes moduliertes Datenpaket annimmt, dass es im Verlauf einer Aufwärtsstreckenkommunikation übertragen worden ist, die Befehlsstation (10) das Paket verwirft, und dann, wenn die Befehlsstation (10) für ein empfangenes moduliertes Datenpaket annimmt, dass es im Verlauf einer Abwärtsstreckenkommunikation übertragen worden ist, die Befehlsstation (10) eine Prozedur zum Empfangen des Pakets, die eine Demodulation des Pakets umfasst, ausführt.

5. Verfahren nach Anspruch 2 oder 3, **dadurch gekennzeichnet, dass** dann, wenn eine führerlose mobile Vorrichtung (3A, 3B) für ein empfangenes moduliertes Datenpaket annimmt, dass es im Verlauf einer Abwärtsstreckenkommunikation übertragen worden ist, die führerlose mobile Vorrichtung (3A, 3B) das Paket verwirft, und dann, wenn die führerlose mobile Vorrichtung (3A, 3B) für ein empfangenes moduliertes Datenpaket annimmt, dass es im Verlauf einer Aufwärtsstreckenkommunikation übertragen worden ist, die führerlose mobile Vorrichtung (3A, 3B) eine Prozedur zum Empfangen des Pakets, die eine Demodulation des Pakets umfasst, ausführt.

6. Verfahren nach einem der vorhergehenden Ansprüche, **dadurch gekennzeichnet, dass** die Aufwärtsstrecken-Präambel und die Abwärtsstrecken-Präambel pseudozufällige binäre Folgen sind.

7. Verfahren nach einem der vorhergehenden Ansprüche, **dadurch gekennzeichnet, dass** die Faltung in Form eines Filters mit endlicher Impulsantwort implementiert ist.

8. System führerloser mobiler Vorrichtungen, das eine Befehlsstation und wenigstens eine führerlose mobile Vorrichtung umfasst, wobei die Befehlsstation mit jeder Drohne unter Verwendung einer Medienzugriffstechnik des Typs Mehrfachzugriff mit zeitlicher Verteilung kommuniziert, wobei jede Kommunikation in Rahmen erfolgt, wobei das System **dadurch gekennzeichnet ist, dass**:

jeder Rahmen in mehrere Zeitintervalle unterteilt ist, jedes Intervall in mehrere Unterintervalle unterteilt ist, jedes Unterintervall in mehrere Perioden unterteilt ist, die die Übertragung von Daten in Form von Datenpaketen ermöglichen, jedes Datenpaket vor seiner Übertragung durch eine im Voraus definierte Modulation moduliert wird, eine erste Periode der mehreren Perioden ermöglicht, eine Präambel zu übertragen, die einem Empfänger der Präambel ermöglicht, eine Kanalschätzung vorzunehmen, um Frequenz-, Phasen- und Taktsynchronisationen und Abgleiche von Empfangssignalen auszuführen, die Präambel außerdem verwendet wird, um die Aufwärtsstreckenkommunikationen der Abwärtsstreckenkommunikation zu identifizieren, und eine zweite Periode ermöglicht, einen Datenblock zu übertragen;
und dass das System Folgendes umfasst:

Einsetzmittel zum Einsetzen in jedes Datenpaket, das im Verlauf einer Aufwärtsstreckenkommunikation von der Befehlsstation (10) zu einer führerlosen mobilen Vorrichtung (3A, 3B) übertragen wird, einer Präambel, die Aufwärtsstrecken-Präambel genannt wird und zu der Präambel, die Abwärtsstrecken-Präambel genannt wird und in jedes Datenpaket eingesetzt wird, das im Verlauf einer Abwärtsstreckenkommunikation von einer führerlosen mobilen Vorrichtung (3A, 3B) zu der Befehlsstation (10) übertragen wird, orthogonal ist; und
Bestimmungsmittel zum Bestimmen beim Empfang eines modulierten Datenpakets, ob das Paket im Verlauf einer Aufwärtsstrecken- oder Abwärtsstreckenkommunikation übertragen worden ist, in Abhängigkeit eines Ergebnisses einer Faltung zwischen dem Paket und einer Referenzpräambel, die entsprechend der im Voraus definierten Modulation moduliert worden ist, wobei die Referenzpräambel der Aufwärtsstrecken-Präambel oder der Abwärtsstrecken-Präambel entspricht.

**9.** Computerprogramm, **dadurch gekennzeichnet, dass** es Anweisungen enthält, um durch eine Vorrichtung (100, 300) das Verfahren nach einem der Ansprüche 1 bis 7 auszuführen, wenn das Programm durch einen Prozessor der Vorrichtung (100, 300) ausgeführt wird.

**10.** Speichermittel, **dadurch gekennzeichnet, dass** sie ein Computerprogramm speichern, das Anweisungen enthält, um durch eine Vorrichtung (100, 300) das Verfahren nach einem der Ansprüche 1 bis 7 auszuführen, wenn das Programm durch einen Prozessor der Vorrichtung (100, 300) ausgeführt wird.

## Claims

**1.** Method implemented in a pilotless mobile device system comprising a control station and at least one pilotless mobile device, the control station communicating with each pilotless mobile device using a medium-access technique of the time division multiple access type in which each communication takes place in frames, the method being **characterised in that**:

each frame is divided into a plurality of timeslots, each timeslot being divided into a plurality of burst intervals, each burst interval being divided into a plurality of periods making it possible to transmit data in the form of data packets, each data packet being modulated by a predefined modulation before transmission thereof, a first period in the plurality of periods making it possible to transmit a preamble enabling a receiver of said preamble to make a channel estimation in order to perform frequency, phase and timing synchronisations and reception signal equalisations, said preamble being used to identify the uplink communications from the downlink communications and a second period making it possible to transmit a burst;
and **in that** the method comprises:

using, in each uplink communication from the control station (10) to a pilotless mobile device (3A, 3B), a preamble, referred to as the uplink preamble, orthogonal to the preamble known as the downlink preamble used in each downlink communication from a pilotless mobile device (3A, 3B) to the control station (10); and,
when a modulated data packet is received, determining whether said packet has been transmitted in the context of an uplink or downlink communication according to a result of a convolution between said packet with a reference preamble modulated according to the predefined modulation, said reference preamble corresponding to the uplink preamble or to the downlink preamble.

**2.** Method according to claim 1, **characterised in that** when, during a convolution calculation (902) between said packet and the modulated downlink preamble, a correlation value greater than or equal to a first predefined threshold is obtained, said packet is considered to have been transmitted in the context of a downlink communication and, when, during a convolution calculation between said packet and the modulated uplink preamble, a correlation value greater than or equal to a second predefined threshold is obtained, said packet is considered to have been transmitted in the context of an uplink communication.

**3.** Method according to claim 2, **characterised in that** when, during a convolution calculation (902) between said packet and the modulated downlink preamble, a correlation value lower than the first predefined threshold is obtained, said packet is considered not to have been transmitted in the context of a downlink communication and, when, during a convolution calculation between said packet and the modulated uplink preamble, a correlation value lower than said predefined threshold is obtained, said packet is considered not to have been transmitted in the context of an uplink communication.

4. Method according to claim 2 or claim 3, **characterised in that** when the control station (10) considers that a modulated data packet received has been transmitted in the context of an uplink communication, the control station (10) rejects said packet, and, when the control station (10) considers that a modulated data packet received has been transmitted in the context of a downlink communication, the control station (10) continues a procedure for receiving said packet comprising a demodulation of said packet.

5. Method according to claim 2 or claim 3, **characterised in that** when a pilotless mobile device (3A, 3B) considers that a modulated data packet received has been transmitted in the context of a downlink communication, said pilotless mobile device (3A, 3B) rejects said packet, and, when the pilotless mobile device (3A, 3B) considers that a modulated data packet received has been transmitted in the context of an uplink communication, the pilotless mobile device (3A, 3B) continues a procedure for receiving said packet comprising a demodulation of said packet.

6. Method according to any of the preceding claims, **characterised in that** the uplink preamble and the downlink preamble are pseudorandom binary sequences.

7. Method according to any of the preceding claims, **characterised in that** the convolution is implemented in the form of a finite impulse response filter.

8. Pilotless mobile device system comprising a control station and at least one pilotless mobile device, the control station communicating with each drone using a medium-access technique of the time division multiple access type in which each communication takes place in frames, the system being **characterised in that**:

each frame is divided into a plurality of timeslots, each timeslot being divided into a plurality of burst intervals, each burst interval being divided into a plurality of periods making it possible to transmit data in the form of data packets, each data packet being modulated by a predefined modulation before transmission thereof, a first period in the plurality of periods making it possible to transmit a preamble enabling a receiver of said preamble to make a channel estimation in order to perform frequency, phase and timing synchronisations and reception signal equalisations, said preamble being used to identify the uplink communications from the downlink communications and a second period making it possible to transmit a burst;
and **in that** the system comprises:

insertion means for inserting, in each data packet transmitted in the context of an uplink communication from the control station (10) to a pilotless mobile device (3A, 3B), a so-called uplink preamble orthogonal to the so-called downlink preamble, inserted in each data packet transmitted in the context of a downlink communication from a pilotless mobile device (3A, 3B) to the control station (10); and
determination means for determining, when a modulated data packet is received, whether said packet was transmitted in the context of an uplink or downlink communication according to a result of a convolution between said packet with a modulated reference preamble according to the predefined modulation, said reference preamble corresponding to the uplink preamble or to the downlink preamble.

9. Computer program, **characterised in that** it comprises instructions for the implementation, by a device (100, 300), of the method according to any of claims 1 to 7, when said program is executed by a processor of said device (100, 300).

10. Storage means, **characterised in that** they store a computer program comprising instructions for the implementation, by a device (100, 300), of the method according to any of claims 1 to 7, when said program is executed by a processor of said device (100, 300).

12
11B
11C
3B
11D
3A
11A
1
11E
11F
11
10
100
20
3B
21C
3A
21B
21D
21E
21F
21A
1

Fig. 1

Fig. 2

30A
3A
30B
1

Fig. 3

1001
CPU
1002
RAM
1003
ROM
100
1000
HDD
1004
COM
1005

Fig. 4A

3001
CPU
3002
RAM
3003
ROM
300
3000
HDD
3004
COM
3005

Fig. 4B

50000A
50000B
50000C
50000D
50000E
50000F
5000A
5000B
500A
500B
500C
414
501
502
503
504
505
506
507
508
509
510
511
512
513
514
601
50

Fig. 5

601
602
6031
6032
603
604
605
606
607

Fig. 6

701
702
703
704
705
706
707
708
709
7102
7101
711
709

Fig. 7

Réception d'un bloc de données à transmettre
800
Génération préambule séquence
801
Génération informations représentatives d'un numéro de sous-ntervalle
802
Codage canal
803
modulation
804
Transmission
805

Fig. 8

Réception d'un paquet
900
convolution
901
Pic de corrélation détecté?
902
non
Fin
904
oui
Poursuite réception
903

Fig. 9

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 2015043123 A1
- EP 1045533 A1